# EUROPÄISCHE PATENTSCHRIFT

(11) **EP 2 715 918 B1**
(45) Veröffentlichungstag und Bekanntmachung des Hinweises auf die Patenterteilung: **07.10.2020**
(21) Anmeldenummer: 12733029.8
(22) Anmeldetag: 27.06.2012
(51) Int. Cl.: H02K 1/32, H02K 9/14, H02K 9/16, H02K 5/136, H02K 15/00

(54) **ELEKTRISCHE MASCHINE MIT ROTORINNENBELÜFTUNG**
ELECTRIC MACHINE WITH ROTOR INTERIOR VENTILATION
MOTEUR ÉLECTRIQUE À VENTILATION INTERNE DU ROTOR

(30) Priorität: 07.07.2011 DE 102011078784
(43) Veröffentlichungstag der Anmeldung: 09.04.2014
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); MÜLLER, Michael, 97688 Bad Kissingen (DE)
(86) Internationale Anmeldenummer: PCT/EP2012/062417
(87) Internationale Veröffentlichungsnummer: WO 2013/004559

(56) Entgegenhaltungen:
- WO-A2-2008/022108
- CN-A- 101 325 352
- JP-U- H0 196 760

## Beschreibung

Die vorliegende Erfindung betrifft eine elektrische Maschine mit einem Stator, einem Rotor, der mit dem Stator magnetisch zusammenwirkt, einem Gehäuse, das den Stator und den Rotor umgibt, und einer Hohlwelle, auf der der Rotor angeordnet ist und die an dem Gehäuse gelagert ist.

Ein Stator einer elektrischen Maschine, der sich durch Verluste erwärmt, lässt sich relativ leicht durch eine Luft- oder Wasserkühlung direkt kühlen. Der Rotor einer elektrischen Maschine lässt sich nur dann direkt kühlen, wenn das Motorgehäuse offen ist. Diese Forderung des offenen Motorgehäuses steht aber unter Umständen einer speziellen Schutzart der elektrischen Maschine entgegen. Insbesondere ist es für elektrische Maschinen mit Explosionsschutz notwendig, dass das Gehäuse geschlossen ist. In diesem Fall lässt sich dann eine direkte Kühlung des Rotors mit bisher bekannten Techniken nicht realisieren.

Die durch Verluste im Rotor entstehende Wärmeenergie kann auch indirekt durch Übertragung mittels Luft an das Motorgehäuse abgegeben werden. Dieses indirekte Kühlprinzip ist jedoch nicht so effizient wie ein direktes Kühlsystem. Darüber hinaus wird der Ständer durch die Rotorverluste aufgeheizt. Folge dieser Aufheizung der elektrischen Maschine ist unter anderem, dass die Fettgebrauchsdauer und damit die Lagerlebensdauer reduziert ist.

Bislang werden hochwirksame Kühlungen beispielsweise bei durchzugsbelüfteten Motoren erreicht. Aufgrund des offenen Gehäuses lässt sich dabei lediglich die Schutzart IP 23 einhalten. Bei geschlossenen Gehäusen kann eine effiziente Kühlung beispielsweise durch einen so genannten "Thermosiphon" im Rotor erreicht werden. Dieser führt die Wärme wirksam nach außen, ohne dass die Öffnung des Gehäuses notwendig wäre.

Darüber hinaus beschreibt die Druckschrift US 4,574,210 A einen Motor mit Außenrotor und ein entsprechendes Kühlsystem. Der Innenstator besitzt eine Hohlwelle, durch die Kühlmittel einströmen kann. Außerdem strömt das Kühlmittel um den Außenrotor herum. Ein Röhrchen mit einem flanschartigen Teller ist in der Hohlwelle des Stators platziert. Kühlluft strömt dann durch das Röhrchen in die Hohlwelle und zwischen dem Röhrchen und der Innenwand der Hohlwelle zurück nach außen. Dort wird das Kühlmittel von dem Hauptkühlstrom mitgerissen, der an dem Teller vorbei zum Außenrotor strömt.

Eine ähnliche elektrische Maschine ist in der Druckschrift US 3,445,696 A beschrieben. Dort strömt das Kühlmittel in die Hohlwelle eines Rotors, kehrt im Inneren der Hohlwelle um und wird von einer Injektionsdüse radial nach außen in den Kühlstrom gezogen, der den Außenstator kühlt.

Aus dem Dokument CN 101 325 352 A ist eine elektrische Maschine mit einer Hohlwelle bekannt. In die Hohlwelle wird ein Röhrchen eingesteckt, mit dem Kühlmittel bis zum Ende des Hohlraums der Hohlwelle transportiert wird. Außerhalb des Röhrchens im Hohlraum fließt das Kühlmittel bis zu Bohrungen in der Hohlwelle zurück.

CN 101 325 352 A offenbart:
Elektrische Maschine mit
   - einem Stator,
   - einem Rotor, der mit dem Stator magnetisch zusammenwirkt,
   - einem Gehäuse, das den Stator und den Rotor umgibt, und
   - einer Hohlwelle, auf der der Rotor angeordnet ist und die an dem Gehäuse gelagert ist,
wobei
   - an der Belüftungsseite auf der Hohlwelle drehfest ein Radiallüfter angeordnet ist,
   - in der Hohlwelle ein Schaft eines Führungselements, das einen sich radial erstreckenden Teller besitzt, angeordnet ist, wobei
   - ein innerer Kühlmittelstrom aus der Hohlwelle durch einen Durchgang radial nach außen förderbar ist, und wobei
   - die Hohlwelle an der Antriebsseite verschlossen ist, und Kühlmittel an der Belüftungsseite stirnseitig in die Hohlwelle eindringen kann, und wobei die Hohlwelle durch den gesamten Rotor reicht, und das Führungselement ein Röhrchen aufweist, durch das hindurch von der Belüftungsseite Kühlmittel durch den Rotor und zwischen der Außenwand des Röhrchens und der Innenwand der Hohlwelle zurück zur Belüftungsseite förderbar ist.

Darüber hinaus beschreibt die Durchschrift WO 2008/022108 A2 einen Wechselstrommotor mit Durchlüftungsprinzip. Luft strömt in das Gehäuse des Elektromotors, durch Aussparungen im Rotor hindurch, im dortigen Wickelraum nach einer Umlenkung radial außerhalb des Stators zurück zur Einlassseite.

Die Aufgabe der vorliegenden Erfindung besteht somit darin, den Rotor einer elektrischen Maschine wirksamer kühlen zu können.
- Erfindungsgemäß wird diese Aufgabe gelöst durch eine elektrische Maschine nach Anspruch 1.

In vorteilhafter Weise ist also auf der Belüftungsseite ein Radiallüfter angeordnet, der sich axial über die Hohlwelle hinaus erstreckt. Der Teller schafft damit einen Spalt zwischen ihm und dem Wellenende, durch den ein Kühlmittelstrom, der aus der Hohlwelle herauskommt radial nach außen in den Radiallüfter gefördert wird. Damit wird ein häufig ungenutzter Bereich des Radiallüfters zur Förderung eines inneren Kühlmittelstroms für den Rotor genutzt.

Erfindungsgemäss ist die Hohlwelle an der Antriebsseite verschlossen, und Kühlmittel kann an der Belüftungsseite stirnseitig in die Hohlwelle eindringen. Dabei reicht die Hohlwelle durch den gesamten Rotor, und in der Hohlwelle befindet sich ein Röhrchen des Führungselements, durch das hindurch von der Belüftungsseite Kühlmittel durch den Rotor und zwischen der Außenwand des Röhrchens und der Innenwand der Hohlwelle zurück zur Belüftungsseite gefördert wird. Dies hat den Vorteil, dass an der Antriebsseite kein Raum für die Zufuhr von Kühlmittel vorgesehen sein muss. Vielmehr erfolgt der Kühlmittelzufluss komplett von der Belüftungsseite. Außerdem wird der Rotor komplett vom Kühlmittel durchströmt, auch wenn das Kühlmittel an der Belüftungsseite in die Hohlwelle einströmt und an der Belüftungsseite auch wieder ausströmt.

Zwischen der Außenwand des Röhrchens und der Innenwand der Hohlwelle können mehrere axial verlaufende Kühlkanäle ausgebildet sein. Dadurch lässt sich die Verteilung des Kühlmittels am Innenumfang der Hohlwelle optimieren.

Darüber hinaus kann der Radiallüfter dazu ausgebildet sein, einen axial auftreffenden äußeren Kühlmittelstrom zur Kühlung des Gehäuses radial nach außen zu fördern. Der Radiallüfter dient dabei also zur Förderung von zwei Kühlmittelströmen, nämlich dem inneren Kühlmittelstrom und dem äußeren Kühlmittelstrom.

Des Weiteren kann das Führungselement radial zur Hohlwelle gerichtete Lüfterflügel aufweisen. Diese sorgen dafür, dass der innere Kühlmittelstrom stärker radial nach außen gefördert wird.

Besonders vorteilhaft ist, wenn das Führungselement ein von der Hohlwelle separates Teil ist und in diese von der Belüftungsseite her eingesteckt ist. Damit liegt ein modulares Führungselement vor, das bei Bedarf eingesetzt bzw. nachgerüstet werden kann.

Darüber hinaus ist es günstig, wenn das Führungselement aus einem Kunststoff hergestellt ist. Ein derartiges Kunststoffteil kann in komplexer Struktur leicht als Spritzgussteil hergestellt werden und besitzt geringes Gewicht, so dass dadurch die Trägheit der elektrischen Maschine kaum beeinflusst wird.

Ebenso ist es vorteilhaft, wenn die Hohlwelle an einem Abschnitt auf der Antriebsseite der elektrischen Maschine nicht hohl ausgebildet ist. Dies bedeutet, dass die Hohlwelle auf der Antriebsseite einen Wellenzapfen aus Vollmaterial besitzt, der stabil genug ist, um beispielsweise ein Getriebe daran zu befestigen.

Das Gehäuse um den Stator und den Rotor kann geschlossen sein. Dennoch gewährleistet die Kühlung der Welle der elektrischen Maschine eine ausreichende Rotorkühlung, ohne dass die elektrische Maschine durchzugsbelüftet sein muss.

In einer speziellen Ausgestaltung bildet das Gehäuse um den Stator und den Rotor einen Explosionsschutz. Damit kann die elektrische Maschine trotz effizienter Rotorkühlung einer hohen Schutzart zugeordnet werden.

Die vorliegende Erfindung wird nun anhand der beigefügten Zeichnungen näher erläutert, in denen zeigen:
- FIG 1: einen Längsschnitt durch einen Elektromotor gemäß der vorliegenden Erfindung;
- FIG 2: eine Ansicht eines Führungselements;
- FIG 3: einen Längsschnitt durch das Führungselement von FIG 2 und
- FIG 4: eine Stirnseitenansicht des Führungselements von FIG 2.

Die nachfolgend näher geschilderten Ausführungsbeispiele stellen bevorzugte Ausführungsformen der vorliegenden Erfindung dar.

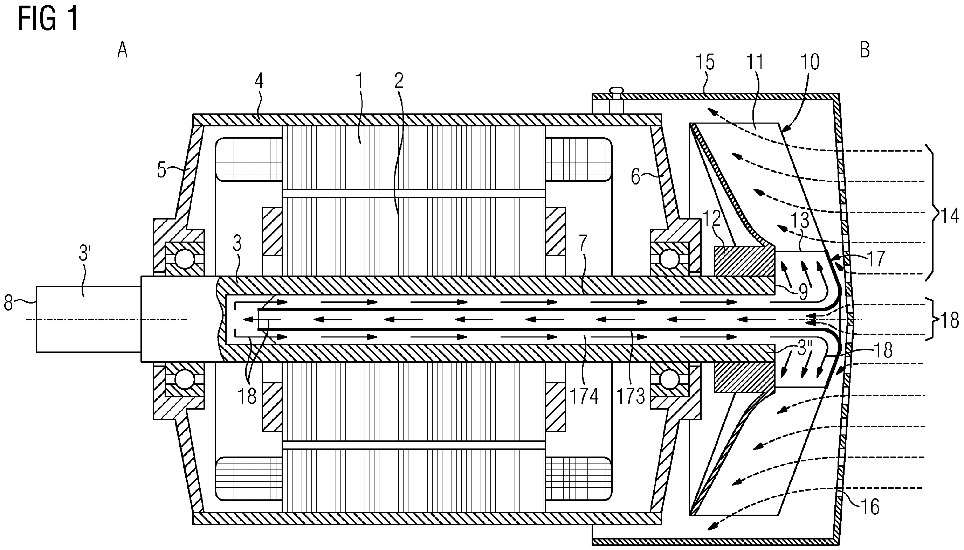

Das Beispiel von FIG 1 betrifft einen elektrischen Motor oder Generator mit einem Stator 1 und einem Rotor 2. Der Rotor 2 ist innerhalb des Stators 1 auf einer Hohlwelle 3 drehbar gelagert.

Der Stator 1 und der Rotor 2 sind in diesem Beispiel in einem geschlossenen Gehäuse 4 untergebracht. Das Gehäuse 4 weist auf der Antriebsseite A ein antriebsseitiges Lagerschild 5 und auf der Belüftungsseite B ein belüftungsseitiges Lagerschild 6 auf. In den Lagerschilden 5 und 6 ist die Hohlwelle 3 gelagert. Das Gehäuse 4 dichtet den Innenraum des Motors einschließlich Stator 1 und Rotor 2 so ab, dass beispielsweise Explosionsschutz gewährleistet ist.

Die Hohlwelle 3 ragt hier durch das gesamte Gehäuse 4, d. h. sie ragt aus dem antriebsseitigen Lagerschild 5 ebenso wie aus dem belüftungsseitigen Lagerschild 6. Darüber hinaus besitzt die Hohlwelle 3 ein Sackloch 7, das an der Belüftungsseite B, d. h. dem Wellenspiegel 9 (Stirnseite der Hohlwelle), offen ist. Das Sackloch 7 reicht durch das belüftungsseitige Lagerschild 6 und den gesamten Rotor 2 hindurch. An dem antriebsseitigen Wellenspiegel 8, d. h. der Stirnseite der Hohlwelle 3 an der Antriebsseite A, ist die Hohlwelle 3 geschlossen. Insgesamt ragt aus dem Lagerschild 5 auf der Antriebsseite A ein Wellenzapfen 3', der Teil der Hohlwelle 3 ist. Der Wellenzapfen 3' ist aus Vollmaterial gefertigt und hat somit erhöhte Stabilität gegenüber dem restlichen Teil der Hohlwelle 3. Insbesondere ist er somit geeignet, ein Getriebe oder dergleichen anzutreiben.

Auf einem Wellenstumpf 3", der Teil der Hohlwelle 3 ist und aus dem belüftungsseitigen Lagerschild 6 ragt, befindet sich ein Radiallüfter 10. Er besitzt gegenüber der Hohlwelle 3 radial nach außen stehende Lüfterflügel 11. Sie sind auf einer Nabe 12 befestigt, welche auf den Wellenstumpf 3" montiert ist.

Um die Trägheit der elektrischen Maschine zu reduzieren ist der Wellenstumpf 3" verkürzt ausgeführt. Dies bedeutet, dass er nicht bis zum axial äußersten Ende des Radiallüfters 10 ragt. Vielmehr endet der Wellenstumpf 3" deutlich vor dem äußersten axialen Ende des Radiallüfters 10, so dass ein Abschnitt 13 jedes Flügelrads 11 über die Hohlwelle 3 bzw. den Wellenstumpf 3" axial hinausragt. Derartig gebaute Radiallüfter sind üblich und dienen zur Förderung eines Hauptkühlstroms 14 radial nach außen. Dieser Hauptkühlstrom 14 trifft zunächst auf eine Lüfterhaube 15, die den Radiallüfter 10 umgibt und an dem Gehäuse 4 befestigt ist. An der Stirnseite weist die Lüfterhaube 15 Durchbrüche 16 auf, durch die der Hauptkühlstrom 14 zum Radiallüfter 10 hindurchdringen kann. Durch den Radiallüfter 10 erhält der Hauptkühlstrom 14 eine radiale Komponente, so dass er radial nach außen zum Mantel der Lüfterhaube 15 bzw. zum Mantel des Gehäuses 4 geführt wird.

In das Sackloch 7 ist ein Führungselement 17 eingesteckt. Das Führungselement 17 sorgt für einen inneren Kühlmittelstrom 18, der auf der Belüftungsseite B in die Hohlwelle 3 eingeführt, durch den Rotor 2 hindurchgeleitet und zurück an der Belüftungsseite B radial nach außen zu den Lüfterflügeln 11 geleitet wird.

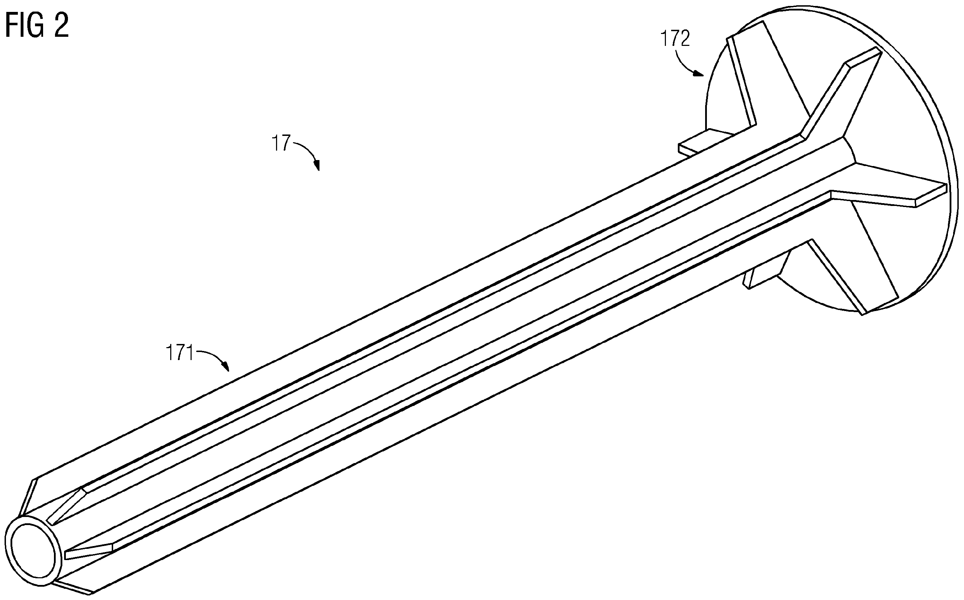

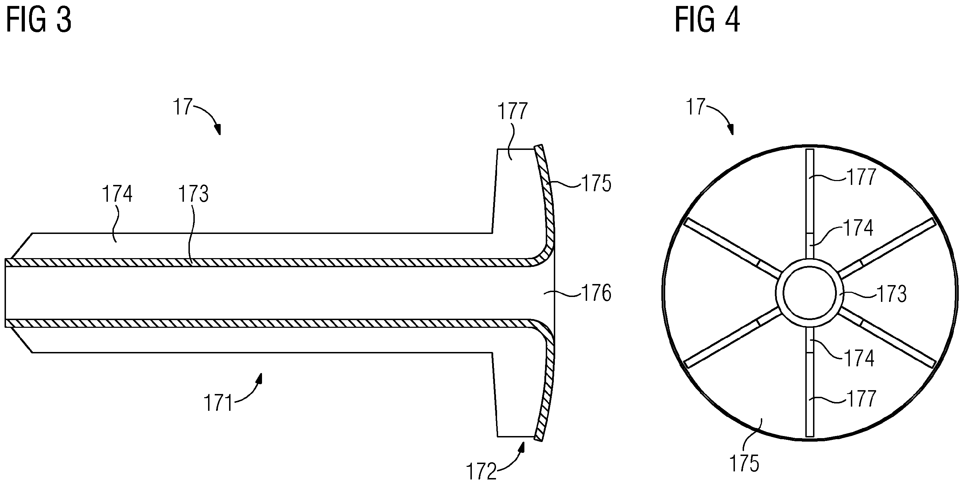

Ein Führungselement 17, das zur Reduzierung der Trägheit der elektrischen Maschine aus einem leichten Kunststoff gefertigt sein kann, ist in FIG 2 dargestellt. Das Führungselement 17 dient zum Führen des inneren Kühlmittelstroms 18 im Inneren des Sacklochs 7 und beim Ausströmen aus der Hohlwelle 3. Ein Längsschnitt des Führungselements 17 ist in FIG 3 und eine Stirnseitenansicht in FIG 4 dargestellt.

Das Führungselement 17 besitzt erfindungsgemäss einen Schaft 171 und einen Tellerabschnitt 172. Der Schaft 171 weist hier ein vollständig durchgängiges Röhrchen 173 auf. An dem Röhrchen 173 sind radial nach außen sternförmig Rippen 174 angeformt (vergleiche FIG 3 und FIG 4). Im vorliegenden Beispiel sind es sechs derartige in axialer Richtung verlaufende Rippen 174. Ist das Führungselement 17 in das Sackloch 7 der Hohlwelle 3 eingesteckt, so bilden sich durch die sternförmigen Rippen 174 Kühlmittelkanäle zwischen der Innenwand des Sacklochs 7 und der Außenwand des Röhrchens 173 jeweils abgetrennt durch die Rippen 174. Im vorliegenden Beispiel ergeben sich also sechs derartige Kühlkanäle, in denen der innere Kühlmittelstrom 18 vom Grund des Sacklochs 7 zurück zur Belüftungsseite B strömt.

An dem einen Ende des Schafts 171 ist der Tellerabschnitt 172 angeformt. Er besitzt einen Teller 175, der sich im Wesentlichen radial nach außen erstreckt. Der Teller 175 besitzt in seinem Zentrum eine Durchgangsöffnung 176, in die das Röhrchen 173 mündet. Der Rand des Tellers 175 ist etwas axial nach hinten zum Schaft 171 gerichtet. Damit folgt er dem Verlauf der Außenkanten der Lüfterflügel 11 (vergleiche FIG 1). Insbesondere schließt der Teller 175 bündig an die Außenseiten der überstehenden Abschnitte 13 der Lüfterflügel 11 an. Unmittelbar an dem Teller 175 weist der Tellerabschnitt 172 radial abstehende Lüfterflügel 177 auf. Diese erstrecken sich am äußersten radialen Rand in axialer Richtung entsprechend dem Abschnitt 13 jedes der Lüfterflügel 11. Damit stehen die Lüfterflügel 177 an dem Wellenspiegel 9 bzw. der Stirnseite der Nabe 12 an und gleichzeitig schließt der Teller 175 bündig mit der Außenkontur der Lüfterflügel 11 ab.

Das Führungselement 17 stellt also ein zusätzliches Bauteil dar, das modular eingesetzt werden kann. Es dient hier als zusätzlicher Rotorlüfter und wird in die Rotorbohrung eingesetzt. Prinzipiell kann das Führungselement 17 aber auch ohne die Lüfterflügel 177 ausgestattet sein.

Das Führungselement besitzt folgende Funktionen:
a) Es wird Kühlmittel bzw. Frischluft von außen an der Belüftungsseite B in das Röhrchen 173 angesaugt.
b) In dem Röhrchen 173 wird das Kühlmittel bzw. Luft durch den Rotor 2 hindurchgeführt.
c) In der Nähe des Bodens des Sacklochs 7 strömt das Kühlmittel (innerer Kühlmittelstrom 18) aus dem Ende des Röhrchens 173. Am Boden des Sacklochs 7 wird der innere Kühlmittelstrom 18 axial umgelenkt, so dass er wieder zur Belüftungsseite B zurückströmt.
d) Die axiale Rückführung des inneren Kühlmittelstroms 18 erfolgt in einem oder mehreren Kanälen, die in Umfangsrichtung durch die Rippen 174 des Führungselements 17 getrennt sind. Die Rückführung erfolgt also außerhalb der Röhre 173, so dass der innere Kühlmittelstrom 18 Wärme der rotierenden Welle 3 (d. h. Verlustwärme des Motors, hauptsächlich die des Rotors) über die innere Wellenoberfläche aufnehmen kann.
e) Schließlich besitzt das Führungselement 17 die Funktion, das Kühlmittel im Bereich des Radiallüfters 10 auszustoßen. Dabei wird der innere Kühlmittelstrom 18 der Rotorkühlung in den äußeren Hauptkühlstrom 14 des Radiallüfters 10 eingeschleust.

Die Funktion des Rotorlüfters (hier Radiallüfter 10) wird durch die Kühlmittelströmung des Hauptlüfters 10 im Ausströmbereich unterstützt. Es entsteht nämlich in dem Übergangsbereich zwischen dem Führungselement 17 und den Lüfterflügeln 11 im Abschnitt 13 eine Unterstützung des inneren Kühlmittelstroms 18 gemäß dem Injektorprinzip (Venturi-Düse). Der Kühlmittelstrom für den Rotor wird dabei von der Belüftungsseite B angesaugt und er wird auch wieder über die Belüftungsseite nach der Erwärmung im Rotor abgeführt.

In dem obigen Beispiel erfolgt das Ansaugen und das Abführen des Kühlmittels an der Belüftungsseite B. In einer alternativen Ausführungsform kann das Kühlmittel auch über den antriebsseitigen Wellenspiegel 8 einströmen. In diesem Fall ist eine axiale Umlenkung des Kühlmittelstroms innerhalb der Welle nicht erforderlich. Das Führungselement 17 muss dann kein Röhrchen 173 aufweisen. Optional kann es natürlich die sternförmig abstehenden Rippen 174 aufweisen, die die axialen Strömungskanäle im Inneren der Welle begrenzen. Hauptaufgabe des Führungselements 17 ist dann das Umlenken des inneren Kühlmittelstroms 18 in radialer Richtung zu den axial überstehenden Abschnitten 13 der Lüfterflügel 11.

Die oben dargestellten Beispiele beziehen sich auf offene Kühlsysteme. Das erfindungsgemäße Kühlprinzip kann aber auch für eine Rotorkühlung in einem geschlossenen System angewendet werden.

Es ist gängige Technik, dass die Wellen 3 im Bereich des Lüftersitzes zurückgesetzt sind, um Wellenstahlmaterial einzusparen. Dieser Raum wird nun erfindungsgemäß für die Lüfterflügel 177 des Rotorinnenlüfters genutzt. Dadurch ist ein modularer Einsatz bzw. ein Nachrüsten der elektrischen Maschine mit einer Rotorinnenbelüftung möglich, da sämtliche Bauteile in den Abmessungen unbeeinflusst bleiben. Es ist lediglich eine Bohrung bzw. ein Sackloch in der Welle vorzusehen. Die Rotordynamik sowie die Biegeeigenfrequenz wird durch die Maßnahmen in der Welle nur in sehr geringem Maße beeinflusst.

Da der Innenraum des Motors bzw. der elektrischen Maschine nicht geöffnet wird, bleibt die Schutzart von der zusätzlichen Rotorkühlung unbeeinflusst. Das Belüftungsprinzip kann somit auch für explosionsgeschützte Motoren angewendet werden.

Vorteilhaft ist außerdem, dass, wie oben bereits angedeutet wurde, durch das Nachrüsten der zusätzlichen Rotorkühlung das Bau- und Anbauvolumen nicht geändert wird. Es ist dabei lediglich eine Bohrung in der Welle herzustellen bzw. nachzurüsten und der Rotorinnenlüfter (Führungselement 17) in die Welle einzuschieben. Vorzugsweise erfolgt eine axiale Fixierung des Führungselements 17 beispielsweise durch einen Schnappverschluss. Die Fixierung sollte eine Demontage des Rotorinnenlüfters zulassen.

In vorteilhafter Weise kann durch das erfindungsgemäße Belüftungskonzept der Motorwirkungsgrad durch Herabsetzen der Ständer- und Rotortemperaturen erhöht werden. Außerdem lässt sich hierdurch die Wicklungslebensdauer, aber auch die Lager- und Fettgebrauchsdauer erhöhen.

## Patentansprüche

1. Elektrische Maschine mit
- einem Stator (1),
- einem Rotor (2), der mit dem Stator (1) magnetisch zusammenwirkt,
- einem Gehäuse (4, 5, 6), das den Stator (1) und den Rotor (2) umgibt, und
- einer Hohlwelle (3), auf der der Rotor (2) angeordnet ist und die an dem Gehäuse (4, 5, 6) gelagert ist, wobei
- an der Belüftungsseite (B) auf der Hohlwelle (3) drehfest ein Radiallüfter (10) angeordnet ist,
- ein Abschnitt (13) eines Lüfterflügels des Radiallüfters sich weiter axial von dem Gehäuse weg erstreckt als die Hohlwelle und
- in der Hohlwelle (3) ein Schaft (171 eines Führungselements (17), das einen sich radial erstreckenden Teller (175) besitzt, angeordnet ist, wobei
- der Teller (175) axial weiter von dem Gehäuse (4, 5, 6) weg angeordnet ist als die Stirnseite (9) der Hohlwelle (3) an der Belüftungsseite (B), so dass
- ein innerer Kühlmittelstrom (18) von dem Abschnitt (13) des Lüfterflügels (11) des Radiallüfters (10) aus der Hohlwelle (3) durch einen Durchgang zwischen der Stirnseite (9) der Hohlwelle an der Belüftungsseite und dem Teller (175) radial nach außen förderbar ist, und wobei
- die Hohlwelle (3) an der Antriebsseite (A) verschlossen ist, und Kühlmittel an der Belüftungsseite (B) stirnseitig in die Hohlwelle (3) eindringen kann, und wobei die Hohlwelle durch den gesamten Rotor reicht, und das Führungselement ein Röhrchen (173) aufweist, durch das hindurch von der Belüftungsseite Kühlmittel durch den Rotor (2) und zwischen der Außenwand des Röhrchens (173) und der Innenwand der Hohlwelle (3) zurück zur Belüftungsseite (B) förderbar ist.

2. Elektrische Maschine nach Anspruch 1, wobei zwischen der Außenwand des Röhrchens (173) und der Innenwand der Hohlwelle (3) mehrere axial verlaufende Kanäle ausgebildet sind.

3. Elektrische Maschine nach einem der vorhergehenden Ansprüche, wobei der Radiallüfter (10) dazu ausgebildet ist, einen axial auftreffenden äußeren Kühlmittelstrom (14) zur Kühlung des Gehäuses (4, 5, 6) radial nach außen zu fördern.

4. Elektrische Maschine nach einem der vorhergehenden Ansprüche, wobei das Führungselement (17) radial zur Hohlwelle gerichtete Lüfterflügel (177) aufweist.

5. Elektrische Maschine nach einem der vorhergehenden Ansprüche, wobei das Führungselement (17) ein von der Hohlwelle (3) separates Teil ist und in diese von der Belüftungsseite (B) her eingesteckt ist.

6. Elektrische Maschine nach einem der vorhergehenden Ansprüche, wobei das Führungselement (17) aus einem Kunststoff hergestellt ist.

7. Elektrische Maschine nach einem der vorhergehenden Ansprüche, wobei die Hohlwelle (3) in einem Abschnitt (3') auf der Antriebsseite (A) der elektrischen Maschine nicht hohl ausgebildet ist.

8. Elektrische Maschine nach einem der vorhergehenden Ansprüche, wobei das Gehäuse (4, 5, 6) um den Stator (1) und den Rotor (2) geschlossen ist.

9. Elektrische Maschine nach Anspruch 8, wobei das Gehäuse (4, 5, 6) um den Stator (1) und den Rotor (2) einen Explosionsschutz bildet.

## Claims

1. Electric machine having
- a stator (1),
- a rotor (2) which interacts magnetically with the stator (1),
- a housing (4, 5, 6) which surrounds the stator (1) and the rotor (2), and
- a hollow shaft (3), on which the rotor (2) is arranged and which is mounted on the housing (4, 5, 6),
wherein
- a radial fan (10) is arranged in a rotationally fixed fashion on the hollow shaft (3) on the ventilation side (B),
- a section (13) of a fan blade of the radial fan extends axially away from the housing to a greater extent than the hollow shaft and
- a shaft (171) of a guide element (17) with a radially extending plate (175) is arranged in the hollow shaft (3), wherein
- the plate (175) is arranged axially further away from the housing (4,5,6) than the end side (9) of the hollow shaft (3) on the ventilation side (B) so that
- an inner coolant flow (18) can thus be delivered from the section (13) of the fan blade (11) of the radial fan (10) out of the hollow shaft (3) through a passage between the end side (9) of the hollow shaft on the ventilation side and the plate (175) radially outwards, and wherein
- the hollow shaft (3) is closed on the drive side (A) and the coolant can penetrate the hollow shaft (3) at the end side on the ventilation side (B), and wherein the hollow shaft passes through the entire rotor and the guide element has a tube (173), through which coolant can be delivered from the ventilation side through the rotor (2) and between the outer wall of the tube (173) and the inner wall of the hollow shaft (3) back to the ventilation side (B).

2. Electric machine according to claim 1, wherein a number of axially running channels is embodied between the outer wall of the tube (173) and the inner wall of the hollow shaft (3).

3. Electric machine according to one of the preceding claims, wherein the radial fan (10) is embodied to deliver radially outwards an axially arriving outer coolant flow (15) in order to cool the housing (4, 5, 6).

4. Electric machine according to one of the preceding claims, wherein the guide element (17) has fan blades (177) aligned radially with respect to the hollow shaft.

5. Electric machine according to one of the preceding claims, wherein the guide element (17) is a part which is separate from the hollow shaft (3) and is inserted herein from the ventilation side (B).

6. Electric machine according to one of the preceding claims, wherein the guide element (17) is manufactured from plastic.

7. Electric machine according to one of the preceding claims, wherein the hollow shaft (3) in a section (3') on the drive side (A) of the electric machine is not embodied to be hollow.

8. Electric machine according to one of the preceding claims, wherein the housing (4, 5, 6) is closed around the stator (1) and the rotor (2).

9. Electric machine according to claim 8, wherein the housing (4, 5, 6) forms an explosion protection around the stator (1) and the rotor (2).

## Revendications

1. Machine électrique, comprenant
- un stator (1),
- un rotor (2), qui coopère magnétiquement avec le stator (1),
- une carcasse (4, 5, 6), qui entoure le stator (1) et le rotor (2), et
- un arbre (3) creux, sur lequel le rotor (2) est disposé et qui est monté sur la carcasse (4, 5, 6),
dans laquelle
- du côté (B) de ventilation, un ventilateur (10) radial est monté en étant solidaire en rotation de l'arbre (3) creux,
- une partie (13) d'une ailette du ventilateur radial s'étend, en s'éloignant davantage axialement de la carcasse que l'arbre creux et
- dans l'arbre (3) creux est disposé un fût (71) d'un élément (17) de guidage, qui possède une assiette (175) s'étendant radialement, dans laquelle
- l'assiette (175) s'éloigne davantage axialement de la carcasse (4, 5, 6) que le côté (9) frontal de l'arbre (3) creux du côté (B) de la ventilation, de sorte que
- un courant (18) intérieur de fluide de refroidissement peut être véhiculé radialement vers l'extérieur par la partie (13) de l'ailette (11) du ventilateur (10) radial à partir de l'arbre (3) creux, en passant par un passage compris entre le côté (9) frontal de l'arbre creux du côté de la ventilation et l'assiette (175), et dans laquelle
- l'arbre (3) creux est fermé du côté (A) d'entraînement et du fluide de refroidissement peut, du côté (B) de ventilation, pénétrer du côté frontal dans l'arbre (3) creux, et dans laquelle l'arbre creux passe dans tout le rotor, et l'élément de guidage a une tubulure (173), dans laquelle le fluide de refroidissement, venant du côté de ventilation, peut être véhiculé dans le rotor (2) et revenir, entre la paroi extérieure de la tubulure (173) à la paroi intérieure de l'arbre (3) creux, au côté (B) de ventilation.

2. Machine électrique suivant la revendication 1, dans laquelle plusieurs canaux s'étendant axialement sont constitués entre la paroi extérieure de la tubulure (173) et la paroi intérieure du tube (3) creux.

3. Machine électrique suivant l'une des revendications précédentes, dans laquelle le ventilateur (10) radial est constitué pour véhiculer vers l'extérieur radialement, pour le refroidissement de la carcasse (4, 5, 6), un courant (14) extérieur de fluide de refroidissement arrivant axialement.

4. Machine électrique suivant l'une des revendications précédentes, dans laquelle l'élément (17) de guidage a des ailettes (177) de ventilateur, dirigées radialement par rapport à l'arbre creux.

5. Machine électrique suivant l'une des revendications précédentes, dans laquelle l'élément (17) de guidage est une partie distincte de l'arbre (3) creux et est emmanché dans celui-ci par le côté (B) de ventilation.

6. Machine électrique suivant l'une des revendications précédentes, dans laquelle l'élément (17) de guidage est en une matière plastique.

7. Machine électrique suivant l'une des revendications précédentes, dans laquelle l'arbre (3) creux est constitué en n'étant pas creux dans une partie (3') du côté (A) d'entraînement de la machine électrique.

8. Machine électrique suivant l'une des revendications précédentes, dans laquelle la carcasse (4, 5, 6) est fermée autour du stator (1) et du rotor (2).

9. Machine électrique suivant la revendication 8, dans laquelle la carcasse (4, 5, 6) forme une protection vis-à-vis de l'explosion autour du stator (1) et du rotor (2).
